# EUROPEAN PATENT SPECIFICATION

(11) **EP 1 858 987 B1**
(45) Date of publication and mention of the grant of the patent: **17.12.2008**
(21) Application number: 05852538.7
(22) Date of filing: 01.12.2005
(51) Int. Cl.: C09D 5/00

(54) **POWDER COATING COMPOSITION FOR COATING SURFACES OF HEAT-SENSITIVE SUBSTRATES**
PULVERLACKZUSAMMENSETZUNG ZUM BESCHICHTEN VON OBERFLÄCHEN WÄRMEEMPFINDLICHER SUBSTRATE
COMPOSITION DE REVETEMENT PULVERULENTE DESTINEE AU REVETEMENT DE SURFACES DE SUBSTRATS THERMO-SENSIBLES

(30) Priority: 01.12.2004 US 1388
(43) Date of publication of application: 28.11.2007
(73) Proprietor: DUPONT POWDER COATINGS SCANDINAVI AB, 59325 Vaestervik (SE)
(72) Inventor: BOLM, Helene, SE-593 37 Vaestervik (SE); KAELLVIK, Ann-marie, SE-449 50 Alafors (SE); STRID, Maria, SE-597 32 Atvidaberg (SE)
(74) Representative: Biering, Christine
(86) International application number: PCT/US2005/043321
(87) International publication number: WO 2006/060479

(56) References cited:
- US-A1- 2005 171 227

## Description

### Field of the Invention

The invention is directed to a powder coating composition for coating surfaces of heat-sensitive substrates providing enhanced sandability of the coating, and that is curable by high energy radiation, such as, UV (ultraviolet radiation) or EB (electron-beam radiation).

### Description of Related Art

Curing powder coatings with elevated temperatures does not allow for the use of temperature-sensitive substrates, such as, wood or plastics. Therefore, powder coatings which can be cured by high energy radiation, such as, UV have been under development for several years. Typically, the compositions contain a binder resin with ethylenically unsaturated groups and a specific photoinitiator to initiate the photopolymerization. This renders it possible to cure such compositions in a short time under moderate temperatures and to provide quality and productivity with low operating and equipment costs.

Substrates of wood or plastics or paper need to have a smooth and homogenous surface if further coating layers are to be applied on the surface. Primer compositions can be used to seal the surface of such substrates and to provide the required conductivity for the application of a further coating layer.

US 5 344 672 describes the combination of a powder coating over a water-based conductive coating to a wood fiber-reinforced plastic substrate to provide better adhesion of the powder coating in comparison to a solvent-based conductive coating, under heat curing of the coating at a temperature below the temperatures needed to cure the conductive coating and the powder coating composition.

EP-A 846 034 relates to a method for powder coating of nonconductive surfaces using, e.g., a polymer material based on unsaturated, amorphous or crystalline polyesters, and curing the pigmented or un-pigmented coating using EB/UV radiation, whereby the substrate surface is heated by convection heat and/or by IR (infrared radiation) prior to powder coating.

In EP-A 636 669, a powder paint formulation for UV curing is disclosed that comprises an unsaturated polymer, such as, unsaturated polyesters and a crosslinking agent based on, e.g., divinyl ether functionalized urethane for coating of heat-sensitive substrates. The formulation provides coatings with a good flow behavior and a good sandability. The applied powder formulation is, prior to UV curing, molten to form coatings with thicknesses of 50 to about 200 µm.

A similar powder composition based on polyester and urethane acrylate as hardener is used for coating, e.g., MDF (medium density fiber) boards and thermoplastics under melting the applied powder with IR and curing with UV. The composition may also contain flow agents, different extenders, special UV-initiators, see Congress paper 29, 3^{rd} Nuernberg Congress, UV Curing Powder Coatings For Heat-Sensitive Substrates, pages 1-9.

There is a need to provide coatings with a higher sandability which are usable as primer coatings on surfaces of heat-sensitive substrates and which are not dependent on whether pigmented or un-pigmented powder coating systems are used as a primer.

### Summary of the Invention

The present invention provides a powder coating composition comprising an intimate mixture comprising
A) 40 to 95 wt% of at least one resin binder selected from the group consisting of polyester resins, epoxy resins, urethane resins and (meth)acrylic resins,
B) 5 to 60 wt% of a filler mixture comprising talcum and at least one additional filler, selected from the group consisting of barium sulfate, calcium carbonate, magnesium carbonate double carbonates of them and silicate,
C) 1 to 20 wt% of at least one wax additive selected from the group consisting of polyamide wax, polyethylene wax and zinc stearate, and
D) 0 to 95 wt% of at least one cross-linking agent, the wt% amounts based on total weight of the powder coating composition.

The powder coating composition according to the invention cures rapidly and completely and makes it possible to receive coatings with improved flow properties as well as a high smoothness and excellent sandability without any texture on surfaces of heat-sensitive substrates. The powder coating composition according to the invention is therefore especially suitable for the use as a pigmented or un-pigmented primer coating composition in a multilayer coating system for such substrates.

The powder coatings of this invention have an excellent adhesion to the substrate surface as well as to a liquid or powder top coat.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both preceded by the word "about." In this manner, slight variations above and below the stated ranges can be used to achieve substantially the same results as values within the ranges. Also, the disclosure of these ranges is intended as a continuous range including every value between the minimum and maximum values.

All patents, patent applications and publications referred to herein are incorporated by reference in their entirety.

The powder coating composition according to the invention comprising 40 to 95 wt.%, preferably 40 to 60 wt%, of at least one of the resin binders, 5 to 60 wt%, preferably 20 to 50 wt%, of a filler mixture comprising talcum and at least one additional filler, 1 to 20 wt%, preferably 1 to 10 wt%, of at least one wax additive, and 0 to 95 wt.%, preferably 0 to 60 wt%, of an curing agent.

All of the above wt.% are based on the total weight of the powder coating composition according to the invention.

Suitable polyesters are unsaturated polyesters which can be crosslinked by free-radical polymerization and can be prepolymers, such as, polymers and oligomers, containing, per molecule, one or more, free-radically polymerizable olefinic double bonds. Unsaturated polyesters of this invention may be produced in a conventional manner by reacting polycarboxylic acids, and the anhydrides and/or esters thereof with polyalcohols, as is, for example, described in D.A. Bates, The Science of Powder Coatings, volumes 1 & 2, Gardiner House, London, 1990.

Examples of suitable polycarboxylic acids, and the anhydrides and/or esters thereof include maleic acid, fumaric acid, malonic acid, adipic acid, 1.4-cyclohexane dicarboxylic acid, isophthalic acid, terephthalic acid, acrylic acid, and their anhydride form, or mixtures thereof. Examples of suitable alcohols are benzyl alcohol, butanediol, hexanediol, diethylene glycol, pentaerytritol, neopentyl glycol, propylene glycol, and mixtures thereof.

Mixtures of carboxyl and hydroxyl group containing unsaturated polyesters may be used. The carboxy-functionalized polyesters according to the invention has an acid value of 10 to 200 mg of KOH/g of resin and the hydroxy-functionalized polyesters has an OH value of 10 to 200 mg of KOH/g of resin.

Epoxy resins are also usable as component A). Examples of suitable epoxy resins are unsaturated epoxies, such as, e.g., reaction products prepared from epichlorohydrin with bisphenol, for example bisphenol A; functionalized resins such as acrylated epoxies.

Suitable (meth)acrylic resins are unsaturated resins, such as, e.g., copolymers prepared from alkyl(methacrylates with glycidyl(meth)acrylates and olefinic monomers; functionalized resins such as polyester acrylics, epoxy acrylics,urethane acrylates.

Suitable urethane resins are, e.g., unsaturated polyester urethanes, (meth)acrylic urethanes.

The term (Meth)acrylate is respectively intended to mean acrylic and/or methacrylic.

Preferably unsaturated polyesters, urethane acrylics, epoxy acrylics and methacrylate resins are used as component A).

The resins have a Tg (glass transition temperature) in the range of, e.g., about 35 to 70°C and an average molecular weight Mn in the range of, e.g., 2000-10.000, Mn determined from gel permeation chromatography (GPC) using polystyrene standard.

Crystalline and/or semicrystalline resins are also usable which have a Tm (melting temperature) in the range of e.g. 50 to 120 °C.

The resins of component A) can also be at least one self crosslinkable resin containing cross-linkable functional groups.

The cross-linking agents, component D), include conventional curing agents, such as, for example, cycloaliphatic, aliphatic or aromatic polyisocyanates; cross-linking agents containing epoxy groups, such as, for example, triglycidyl isocyanurate (TGIC); polyglycidyl ethers based on diethylene glycol; glycidyl-functionalized (meth)acrylic copolymers; and cross-linking agents containing amino, amido, (meth)acrylate or hydroxyl groups, as well as vinyl ethers. Furthermore, conventionally cross-linking agents such as dicyanodiamide hardeners, carboxylic acid hardeners or phenolic hardeners are usable.

The powder coating composition of this invention contains 5 to 60 wt.% of a filler mixture comprising talcum and at least one filler selected from the group consisting of barium sulfate, calcium carbonate, magnesium carbonate, double carbonates of them and silicate.

The use of a mixture containing one or two fillers and talcum are preferred.

The ratio of the preferred mixture of the filler(s) with talcum is from 75:25 to 98:2, preferred ratios are 90:10 to 95:5. If two fillers and talcum are used in the filler mixture the two fillers among themselves have a ratio of, e.g., 25:75 to 75:25.

The powder coating composition of this invention contains 1 to 20 wt.% of at least one wax additive, selected from the group consisting of polyamide wax, polyethylene wax and zinc stearate. These are waxes such as, for example, Ceraflour 993 and Ceraflour 990 from BYK®, Micromide 528 and MPP-230F from Micro Powders®, Lanco TPW-279 and Lanco PE 1544 F from Lubrizol®. The waxes can have modifications such as being micronized or PTFE modified, and have a melting temperature in the range of, e.g., 105 to 150°C.

The powder coating composition is curable by high energy radiation. UV (ultraviolet) radiation or electron beam radiation may be used as high-energy radiation. UV-radiation is preferred. Irradiation may proceed continuously or discontinuously, that means in cycles.

Irradiation may be carried out, for example, in a belt unit fitted with one or more UV-radiation emitters or with one or more UV-radiation emitters positioned in front of the object to be irradiated, or the area to be irradiated, or the substrate to be irradiated and/or the UV-radiation emitters are moved relative to one another during irradiation.

In principle, the duration of irradiation distance from the object and/or radiation output of the UV-radiation emitter may be varied during UV irradiation. The preferred source of radiation comprises UV-radiation sources emitting in the wavelength range from 180 to 420 nm, in particular, from 200 to 400 nm. Examples of such UV-radiation sources are optionally doped high, medium and low pressure mercury vapor emitters and gas discharged tubes, for such as, for example, low pressure xenon lamps. Apart from these continuously operating UV-radiation sources, however, it is also possible to use discontinuous UV-radiation sources. These are preferably so-called high-energy flash devices (UV-flash lamps for short). The UV-flash lamps may contain a plurality of flash tubes, for example, quartz tubes filled with inert gas, such as xenon.

Electrodeless UV lamps are also usable as UV radiation source, such as, e.g., UV lamps from the company Fusion UV Systems, Inc.

The distance between the UV-radiation sources and the substrate surface to be irradiated may be, for example, 2 to 300 cm.

Irradiation with UV-radiation may proceed in one or more irradiation steps. In other words, the energy to be applied by irradiation may be supplied completely in a single irradiation step or in portions in two or more irradiation steps. UV doses of 1000 to 5000 mJ/cm² are typical.

The powder coating compositions according to the invention may contain as further components the constituents conventional in powder coating technology, such as, degassing auxiliaries, flow-control agents, flatting agents, texturing agents, fillers, extenders, photoinitiators, catalysts, hardeners, dyes and pigments. Compounds having anti-microbial activity may also be added to the powder coating compositions.

The powder coating compositions may contain photoinitiators in order to initiate the free-radical polymerization. Suitable photoinitiators include, for example, those which absorb in the wavelength range from 190 to 600 nm. Examples for photoinitiators for free-radically curing systems are benzoin and derivatives, acetophenone and derivatives, benzophenone and derivatives, thioxanthone and derivatives, anthraquinone, organo phosphorus compounds, such as, for example, acyl phosphine oxides.

Preferably hydroxyalkyl phenones and/or acyl phosphine oxides are used as photoinitiators.

The photoinitiators are used, for example, in quantities of 0.1 to 7 weight-%, relative to the total of resin solids and photoinitiators. The photoinitiators may be used individually or in combination.

The powder coating composition may contain transparent, color-imparting and/or special effect-imparting pigments and/or extenders. Suitable color-imparting pigments are any conventional coating pigments of an organic or inorganic nature. Examples of inorganic or organic color-imparting pigments are titanium dioxide, micronized titanium dioxide, carbon black, azopigments, and phthalocyanine pigments. Examples of special effect-imparting pigments are metal pigments, for example, made from aluminum, copper or other metals, interference pigments, such as, metal oxide coated metal pigments and coated mica. Examples of usable extenders are silicon dioxide, aluminum silicate, barium sulfate, and calcium carbonate.

The additives are used in conventional amounts known to the person skilled in the art, for example, 0.01 to 10 wt. %, based on the total weight of the powder coating composition.

The powder coating composition also may contain further binder resins, such as thermosetting resins, such as, in amounts of, e.g., 0 to 90 wt %, relative to the total powder composition, to make dual curing possible if desired. Such resins may be, for example, epoxy, polyester, (meth)acrylic, silanes and/or urethane resins.

The powder coating composition may be prepared by conventional manufacturing techniques used in the powder coating industry. For example, the ingredients used in the powder coating composition, can be blended together and heated to a temperature to melt the mixture and then the mixture is extruded. The extruded material is then cooled on chill roles, broken up and then ground to a fine powder, which can be classified to the desired grain size, for example, to an average particle size of 20 to 200 microns. The powder coating composition may also be prepared by spraying from supercritical solutions, NAD "non-aqueous dispersion" processes or ultrasonic standing wave atomization process.

The powder coating composition of this invention may be applied by electrostatic spraying, thermal or flame spraying, or fluidized bed coating methods, all of which are known to those skilled in the art.

The coatings may be applied to non-metallic substrates as primer coat or as coating layer in a multi-layer film build.

Metallic substrates are also able to be coated with the powder coating composition according to the invention, as primer coat or as coating layer in a multi-layer film build.

The applied powder coating compositions according to the invention can be coated with at least one coating layer, e.g., a top coat which can be each kind of top coats, e.g., a UV powder top coat or a liquid top coat.

In certain applications, the substrate to be coated may be pre-heated before the application of the powder, and then either heated after the application of the powder or not. For example, gas is commonly used for various heating steps, but other methods, e.g., microwaves, IR or NIR are also known.

Substrates, which may be considered, are wooden substrates, wood fiber material, paper or plastic parts, for example, also fiber re-inforced plastic parts, for example, automotive and industrial bodies or body parts.

The curing of the powder coating composition is possible by UV irradiation known by the skilled person and/or by thermal curing, e.g., by gas heating, IR or NIR as known in the art, for ex. : Dual curing means a curing method of the powder coating composition according to the invention where the applied composition can be cured both by UV irradiation and by thermal curing methods known by a skilled person.

The present invention is further defined in the following Examples. It should be understood that these Examples are given by way of illustration only. From the above discussion and these Examples, one skilled in the art can ascertain the essential characteristics of this invention, and without departing from the spirit and scope thereof, can make various changes and modifications of the invention to adapt it to various uses and conditions. As a result, the present invention is not limited by the illustrative examples set forth herein below, but rather is defined by the claims contained herein below.

The following Examples illustrate the invention. The amounts are in parts per weight.

### Examples

### Example 1

### Manufacturing of powder coating compositions according to the invention and application

**Formulation 1:**

| | |
|---|---|
| Uracross® P 3125, DSM (unsaturated polyester) | 830 |
| Uracross® P 3307, DSM (vinyl ether urethane) | 170 |
| Ti-Pure® R-902 (titanium dioxide) | 100 |
| Resiflow® PV 88 (flow additive) | 15 |
| Irgacure® 819 (photoinitiator) | 15 |
| Irgacure® 2959 (photoinitiator) | 15 |
| Microdol® Super (magnesium carbonate) | 350 |
| Finntalc M40 (talcum) | 35 |
| Ceraflour 990 (wax) | 50 |

**Formulation 2:**

| | |
|---|---|
| Uvecoat®1000, Surface Specialties (unsaturated polyester) | 850 |
| Uvecoat® 9010, Surface Specialties (unsaturated polyester) | 150 |
| Ti-Pure® R-902 | 150 |
| Resiflow® PV 88 | 20 |
| Irgacure® 819 | 20 |
| Irgacure® 651 (photoinitiator) | 15 |
| Blanc Fixe Micro (barium sulphate) | 400 |
| Microtalc® AT1 (talcum) | 40 |
| Lanco TPW-279 (wax) | 40 |

The components of each formulation are mixed together by dry-mixing and then by melt mixing using an extruder Buss PR46 (firm: Buss AG), at a temperature of 60 to 90°C. After cooling the formulation is ground with a grinder ACM2 (firm: Hosokawa MikroPul), and sieved to particles having number average particle size (dₘ) of 35 µm.

Each powder coating composition is applied to a MDF board panel by the process as follows:

The MDF board plate is hanging vertically and is applied electrostatically with powder spray guns on both sides as well as the edges in one pass. Before application the MDF is preheated with IR (preferably MW IR) to a temperature of about 60-80°C to get a more even film thickness distribution. Some MDF qualities such as more conductive MDF are not necessary to preheat to get an even film thickness distribution. After the application the powder is melted with a combination of IR (preferably MW IR) and convection heat to a peak temperature of about 110-130°C and this takes about 1-3 minutes depending on the oven. After melting when the coating is still in melted phase it is then UV cured with UV lamps, Gallium doped, with a UV dose of about 1000-5000 mJ/cm².
A top coating follows by using a liquid acid curing top coat DH1325-5505 Care Top 35 from Becker Acroma, via spray-coating with a dry film thickness of 30-50 µm.

### Example 2

### Testing of the Coatings

**Table 1:**

| **Examples** | **Film thickness of the primer¹** | **Adhesion to the MDF substrate²** | **Adhesion between the sanded primer and a liquid acid curing topcoat²** | **Sandability of the primer³** | **Visual observation of fiber rising in the profile and on the edges caused by the primer** |
|---|---|---|---|---|---|
| Formulation 1 and 2 | 100-120 | Gt 1 | Gt 1 | 140-150 | Very little or no fiber rising |
| Acid curing liquid primer | 40-50 | Gt 2 | Gt 2 | 175-190 | Some fiber rising |
| Waterbased liquid primer | 40-50 | Gt 2 | Gt 2 | 175-190 | Rather much fiber rising |

| | | | | | |
|---|---|---|---|---|---|
| 1. Measured with an Erichsen TNO Paint Borer Model 518 [µm] 2. ISO 2409 3. Taber Abrasion Resistance - Weight loss [mg] every 50 cycles using a S33 sand paper and 500 g weight (the sand paper is replaced every 50 cycles) | | | | | |

When applying the acid curing liquid primer DF1324-9001 Care Prime and the waterbased liquid primer ED745-9001 Laqvin Prime, both from Becker Acroma, on MDF board panels this is done horizontally in the following way:
The MDF board panel is spray-coated in a horizontal line. During the 1^{st} pass the backside is coated and in the 2^{nd} pass the front side is coated. After each coating the paint must be dried before the next coating step by increased temperature.
After drying the liquid acid curing top coat DH1325-5505 Care Top 35 is applied by spray-coating with a dry film thickness of 30-50 µm.

## Claims

1. A powder coating composition comprising
A) 40 to 95 wt% of at least one resin binder selected from the group consisting of polyester resins, epoxy resins, urethane resins and (meth)acrylic resins,
B) 5 to 60 wt% of a filler mixture comprising talcum and at least one additional filler, selected from the group consisting of barium sulfate, calcium carbonate, magnesium carbonate double carbonates of them and silicate,
C) 1 to 20 wt% of at least one wax additive selected from the group consisting of polyamide wax, polyethylene wax and zinc stearate, and
D) 0 to 95 wt% of at least one cross-linking agent,
the wt% amounts being based on total weight of the powder coating composition.

2. The powder coating composition according to claim 1 wherein 40 to 60 wt% of at least one resin binder selected from the group consisting of polyester resins, epoxy resins, urethane resins and (meth)acrylic resins are used as component A).

3. The powder coating composition according to claim 1 wherein at least one polyester resin is used as component A).

4. The powder coating composition according to claim 1 wherein 20 to 50 wt% of a filler mixture comprising talcum and at least one additional filler are used as component B).

5. The powder coating composition according to claim 1 wherein the ratio between talcum and the filler(s) is from 25:75 to 2:98.

6. The powder coating composition according to claim 5 wherein the ratio between talcum and the filler(s) is from 10:90 to 5:95.

7. The powder coating composition according to claim 1 wherein a mixture of talcum with two additional fillers are used as component B).

8. The powder coating composition according to claim 7 wherein the two additional fillers among themselves have a ratio of 25:75 to 75:25.

9. A process of coating a substrate wherein the powder coating composition according to claim 1 is used.

10. The process according to claim 9 wherein the powder coating composition according to claim 1 is used for a primer coating.

11. The process according to claim 9 wherein the powder coating composition according to claim 1 is used for a coating layer in a multi-layer film build.

12. The process according to claim 9 wherein the substrate is a wooden substrate, a wood fiber material, a paper or plastic part, a fiber re-inforced plastic part for automotive and industrial bodies or body parts.

13. A coated substrate coated with the powder coating composition according to claim 1.

## Patentansprüche

1. Pulverlackzusammensetzung, aufweisend:
A) 40% bis 95 Gew.% mindestens eines Harzbindemittels, das ausgewählt ist aus der Gruppe, bestehend aus Polyesterharzen, Epoxyharzen, Urethanharzen und (Meth)acrylharzen;
B) 5% bis 60 Gew.% einer Füllermischung, die Talkum aufweist und mindestens einen zusätzlichen Füller, der ausgewählt ist aus der Gruppe, bestehend aus Bariumsulfat, Calciumcarbonat, Magnesiumcarbonat und Doppelcarbonate davon sowie Silicat;
C) 1% bis 20 Gew.% mindestens eines Wachs-Additivs, das ausgewählt ist aus der Gruppe, bestehend aus Polyamid-Wachs, Polyethylen-Wachs und Zinkstearat und
D) Null Prozent bis 95 Gew.% mindestens eines vernetzenden Mittels;
wobei die Gewichtsanteile auf das Gesamtgewicht der Pulverlackzusammensetzung bezogen sind.

2. Pulverlackzusammensetzung nach Anspruch 1, wobei 40% bis 60 Gew.% mindestens eines Harzbindemittels ausgewählt sind aus der Gruppe, bestehend aus Polyesterharzen, Epoxyharzen, Urethanharzen und (Meth)acrylharzen, die als Komponente A) verwendet werden.

3. Pulverlackzusammensetzung nach Anspruch 1, wobei mindestens ein Polyethylenharz als Komponente A) verwendet wird.

4. Pulverlackzusammensetzung nach Anspruch 1, wobei 20% bis 50 Gew.% einer Füllermischung Talkum aufweisen und mindestens ein zusätzlicher Füller als Komponente B) verwendet wird.

5. Pulverlackzusammensetzung nach Anspruch 1, wobei das Verhältnis zwischen Talkum und dem/den Füller(n) 25:75 bis 2:98 beträgt.

6. Pulverlackzusammensetzung nach Anspruch 1, wobei das Verhältnis zwischen Talkum und dem/den Füller(n) 10:90 bis 5:95 beträgt.

7. Pulverlackzusammensetzung nach Anspruch 1, wobei eine Mischung von Talkum und zwei zusätzlichen Füllern als Komponente B) verwendet wird.

8. Pulverlackzusammensetzung nach Anspruch 7, wobei die zwei zusätzlichen Füller untereinander ein Verhältnis von 25:75 bis 75:25 haben.

9. Verfahren zum Beschichten eines Substrats, wobei die Pulverlackzusammensetzung nach Anspruch 1 verwendet wird.

10. Verfahren nach Anspruch 9, wobei die Pulverlackzusammensetzung nach Anspruch 1 als Grundierungsbeschichtung verwendet wird.

11. Verfahren nach Anspruch 9, wobei die Pulverlackzusammensetzung nach Anspruch 1 für eine Lage einer Beschichtung in einem Aufbau eines mehrlagigen flächigen Erzeugnisses verwendet wird.

12. Verfahren nach Anspruch 9, wobei das Substrat ein Substrat aus Holz ist, ein Material aus Holzfaser, ein Teil aus Papier oder Kunststoff, ein Teil aus faserverstärktem Kunststoff für Autokarosserien und technische Aufbauten oder Karosserieteile.

13. Beschichtetes Substrat, beschichtet mit der Pulverlackzusammensetzung nach Anspruch 1.

## Revendications

1. Composition de revêtement en poudre comprenant:
A) de 40 à 95% en poids d'au moins un liant de résine choisi dans le groupe constitué de résines de polyester, de résines époxy, de résines d'uréthane et de résines (méth)acryliques,
B) de 5 à 60% en poids d'un mélange de charges comprenant du talc et au moins une charge supplémentaire, choisie dans le groupe constitué de sulfate de baryum, de carbonate de calcium, de carbonate de magnésium, de carbonates doubles de ceux-ci et de silicate,
C) de 1 à 20% en poids d'au moins un additif de cire choisi dans le groupe constitué de cire de polyamide, de cire de polyéthylène et de stéarate de zinc, et
D) de 0 à 95% en poids d'au moins un agent de réticulation,
les quantités en poids étant basées sur le poids total de la composition de revêtement en poudre.

2. Composition de revêtement en poudre selon la revendication 1, dans laquelle de 40 à 60% en poids d'au moins un liant de résine sont choisis dans le groupe constitué de résines de polyester, de résines époxy, de résines d'uréthane et de résines (méth)acryliques sont utilisés en tant que composant A).

3. Composition de revêtement en poudre selon la revendication 1, dans laquelle au moins une résine de polyester est utilisée en tant que composant A).

4. Composition de revêtement en poudre selon la revendication 1, dans laquelle de 20 à 50% en poids d'un mélange de charges comprennent du talc et au moins une charge supplémentaire est utilisée en tant que composant B).

5. Composition de revêtement en poudre selon la revendication 1, dans laquelle le rapport entre le talc et la ou les charges est de 25:75 à 2:98.

6. Composition de revêtement en poudre selon la revendication 5, dans laquelle le rapport entre le talc et la ou les charges est de 10:90 à 5:95.

7. Composition de revêtement en poudre selon la revendication 1, dans laquelle un mélange de talc avec deux charges supplémentaires est utilisé en tant que composant B).

8. Composition de revêtement en poudre selon la revendication 7, dans laquelle les deux charges supplémentaires entre elles ont un rapport de 25:75 à 75:25.

9. Procédé pour le revêtement d'un substrat, dans lequel la composition de revêtement en poudre selon la revendication 1 est utilisée.

10. Procédé selon la revendication 9, dans lequel la composition de revêtement en poudre selon la revendication 1 est utilisée pour un revêtement de couche de fond.

11. Procédé selon la revendication 9, dans lequel la composition de revêtement en poudre selon la revendication 1 est utilisée pour une couche de revêtement dans une construction de film multicouche.

12. Procédé selon la revendication 9, dans lequel le substrat est un substrat en bois, un matériau de fibres de bois, un papier ou une pièce de plastique, une pièce de plastique renforcée de fibres pour des carrosseries automobiles et industrielles ou des pièces de carrosserie.

13. Substrat revêtu qui est revêtu avec la composition de revêtement en poudre selon la revendication 1.
